# EUROPÄISCHE PATENTSCHRIFT

(11) **EP 2 610 506 B1**
(45) Veröffentlichungstag und Bekanntmachung des Hinweises auf die Patenterteilung: **15.03.2017**
(21) Anmeldenummer: 11010276.1
(22) Anmeldetag: 29.12.2011
(51) Int. Cl.: F16B 37/08, F16B 37/14

(54) **Federmutter**
Spring nut
Ecrou à ressort

(43) Veröffentlichungstag der Anmeldung: 03.07.2013
(73) Patentinhaber: ITW Fastener Products GmbH, 58642 Iserlohn (DE)
(72) Erfinder: Kuhm, Michel, 67340 Ingwiller (FR); Maurer, Jérome, 67700 Gottenhouse (FR); Jakotey, Jérémy, 78290 Croissy sur Seine (FR)
(74) Vertreter: Hauck Patentanwaltspartnerschaft mbB

(56) Entgegenhaltungen:
- EP-A1- 1 621 782
- DE-A1- 3 728 070
- US-A- 2 339 664

## Beschreibung

Die Erfindung betrifft eine Federmutter nach dem Oberbegriff des Anspruchs 1.

Eine solche Federmutter ist in der US 2 339 664 A gezeigt. Ähnliche Federmuttern werden verwendet, um ein Bauteil, beispielsweise ein Innenraumverkleidungsteil, an einem zweiten Bauteil, beispielsweise einem Karosserieteil, zu befestigen. Am Karosserieteil ist dafür ein Bolzen vorgesehen, auf den die Federmutter aufgeschoben und an diesem fixiert werden kann. Das zu befestigende Bauteil wird zuerst mit einer Öffnung über den Bolzen geschoben, und anschließend wird die Federmutter auf den Bolzen aufgeschoben und gegen das zweite Bauteil gedrückt, das dadurch am Bolzen fixiert wird. Eine solche Federmutter ist beispielsweise aus der DE 197 33 771 C1 bekannt.

Nachteilig an den bisher bekannten Federmuttern ist zum einen, dass diese nur für eine bestimmte Bolzengröße verwendet werden können. Zudem muss die Länge des Bolzens genau auf das zu befestigende Bauteil bzw. die Federmutter abgestimmt werden, um zu verhindern, dass der Bolzen auf der Rückseite der Federmutter hinausragt, was unerwünscht ist.

Aufgabe der Erfindung ist es, eine Federmutter der eingangs genannten Art bereitzustellen, die den Bolzen vollständig abdeckt.

Zur Lösung der Aufgabe weist eine Federmutter der eingangs genannten Art eine innere Wandung auf, die die Aufnahme stirnseitig sowie teilweise in Umfangsrichtung umschließt. Die Federmutter umschließt die Aufnahme an einer der Einschuböffnung gegenüberliegenden Stirnwand und in Umfangsrichtung vollständig. Dadurch ist der Bolzen rückseitig vollständig überdeckt, sodass dieser sicher vor versehentlichem Kontakt geschützt ist. Die Aufnahme ist so lang ausgebildet, dass der Bolzen auf der gesamten Länge in dieser umschlossen ist.

Die Federmutter soll den Bolzen auch bei unterschiedlich großen Bolzendurchmessern oder -längen sicher umschließen. Die äußere Wandung gibt insbesondere in Umfangsrichtung die Form der Federmutter vor, sodass unabhängig von der Größe des Bolzens ein einheitliches Erscheinungsbild der Federmutter vorhanden ist. Die innere Wandung dient der Anpassung an die jeweilige Bolzengröße und kann vorzugsweise in Umfangsrichtung federnd nachgeben und sich so an den Durchmesser des Bolzens anpassen.

Um eine flexible Anpassung an die jeweilige Bolzengröße zu ermöglichen, weist die innere Wandung vorzugsweise zumindest zwei in Zylinderlängsrichtung verlaufende, radial federnde Laschen auf, die insbesondere in Umfangsrichtung gleichmäßig verteilt angeordnet sind.

Diese Laschen können sich durch die radiale Nachgiebigkeit ideal an den Durchmesser der jeweilige Bolzengröße anpassen. Da in Umfangsrichtung zudem die in Umfangsrichtung geschlossene äußere Wandung vorhanden ist, kann sich die innere Wandung auch derart anpassen, dass zwischen den Federlaschen Freiräume vorhanden sind. Diese werden in Umfangsrichtung durch die geschlossene äußere Wandung überdeckt.

Zur Lagerung der federnden Laschen ist vorzugsweise stirnseitig ein Steg vorgesehen, der zudem die Aufnahme stirnseitig abschließt. Die federnden Laschen weisen ein stirnseitiges, an diesem Steg federnd gelagertes Ende sowie ein freies, der Einschuböffnung zugewandtes Ende auf. Dies ermöglicht eine ideale Anpassungsmöglichkeit der Federlaschen.

Solche Federmuttern werden vorzugsweise aus Kunststoff in einem Spritzgussverfahren hergestellt. Um den Herstellungsaufwand zu reduzieren, ist es gewünscht, dass eine solche Federmutter in einer Form ohne Schieber hergestellt werden kann. Dazu ist es erforderlich, dass die Federmutter keine Hinterschnitte aufweist. Dies wird dadurch erreicht, dass der Halteabschnitt sowie der Steg und die innere Wandung in Zylinderlängsrichtung nicht überlappen. Die äußere Wandung ist in diesem Fall vorzugsweise zylinderförmig ausgebildet. Die Formhälften einer solchen Spritzgussform können in Richtung der Zylinderlängsachse aufeinander zu bewegt werden, wobei an den Formhälften Vorsprünge vorgesehen sind, die beispielsweise die Aufnahme formen. Da sich die Halteabschnitte und die Stege bzw. die innere Wandung nicht überlappen, können diese problemlos gefertigt werden, da in Längsrichtung keine Hinterschnitte innerhalb der Federmutter vorhanden sind.

Der Halteabschnitt weist vorzugsweise Rastelemente auf, die in radialer Richtung federnd ausgebildet sind, sodass sich diese an verschiedene Bolzengrößen bzw. Bolzendurchmesser anpassen können.

Die Rastelemente können beispielsweise in Längsrichtung paarweise gegenüberliegend angeordnet sein, sodass diese am Bolzen bzw. einer am Bolzen vorgesehenen Verzahnung verrasten können.

Nach der Montage ist es häufig erwünscht, dass die Federmutter zum Austausch eines Bauteils auch wieder gelöst werden kann. Um dies sicherzustellen, sind die Rastelemente beispielsweise in Längsrichtung versetzt angeordnet und bilden gewissermaßen ein Innengewinde. Auf dem Bolzen ist in dieser Ausführungsform ein entsprechendes Gewinde oder entsprechende Vorsprünge, die ein Gewinde bilden, vorhanden. Da die Rastelemente federnd nachgeben können, kann die Federmutter ohne Drehbewegung auf dem Bolzen aufgesetzt werden, was eine einfache Montage der Federmutter ermöglicht. Zur Demontage wird die Federmutter dagegen einfach von dem Bolzen heruntergeschraubt.

Weitere Vorteile und Merkmale ergeben sich aus der nachfolgenden Beschreibung in Verbindung mit den beigefügten Zeichnungen. In diesen zeigen:
- - Figur 1: eine perspektivische Ansicht einer erfindungsgemäßen Federmutter,
- - Figur 2: eine Schnittansicht durch die Federmutter aus Figur 1, und
- - Figur 3: eine zweite perspektivische Ansicht der Federmutter aus Figur 1.

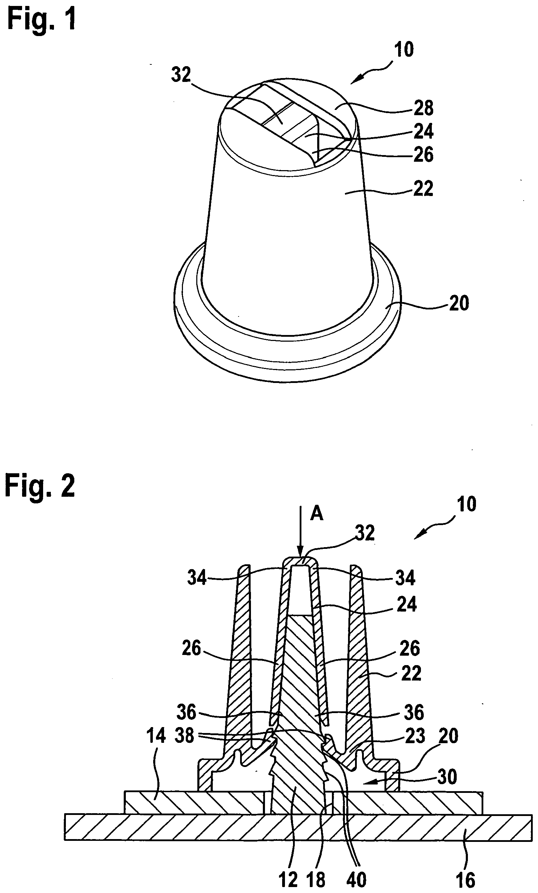

In Figur 1 ist eine Federmutter 10 zur Befestigung auf einem Bolzen 12 dargestellt. Mit einer solchen Federmutter 10 kann ein erstes Bauteil 14, beispielsweise ein Verkleidungsteil für einen Fahrzeuginnenraum, an einem zweiten Bauteil 16, beispielsweise einer Fahrzeugkarosserie, befestigt werden (siehe Figur 2). Der Bolzen 12 ist in diesem Fall fest am zweiten Bauteil 16 angebracht, beispielsweise angeschweißt. Das erste Bauteil 14 wird mit einer Öffnung 18 auf den Bolzen 12 aufgeschoben, und anschließend die Federmutter 10 auf den Bolzen 12 aufgeschoben und an diesem fixiert. Dadurch wird das erste Bauteil 14 durch die Federmutter 10 gegen das zweite Bauteil 16 gedrückt und sicher an diesem gehalten.

Wie in den Figuren 1 und 2 zu sehen ist, hat die Federmutter 10 einen ringförmigen Anlagebereich 20, mit dem die Federmutter 10 am ersten Bauteil 14 anliegt und an dem eine Einschuböffnung 30 für den Bolzen 12 vorgesehen ist. Der Anlagebereich 20 geht in eine im Wesentlichen zylinderförmig ausgebildete äußere Wandung 22 über, die im Wesentlichen zylindrisch ausgebildet ist, wobei die Stirnflächen dieses Zylinders offen ausgebildet sind. Auf der Innenseite der äußeren Wandung 22 ist im Anschluss an den Anlagebereich 20 ein Halteabschnitt 23 vorgesehen, der der Fixierung des Bolzens 12 dient.

Die Federmutter 10 weist des Weiteren eine innere Wandung 24 auf, die, wie im Folgenden dargestellt wird, durch mehrere federnde Laschen 26 gebildet ist. An einer Stirnwand 28, die einer Einschuböffnung 30 für den Bolzen 12 gegenüberliegt, ist ein Steg 32 vorgesehen, an dem die Federlaschen 26 mit einem stirnseitigen Ende 34 federnd gehalten sind. Ein freies Ende 36 der Federlaschen 26 weist in Richtung der Einschuböffnung 30 und ist in radialer Richtung federnd ausgebildet.

Wie in Figur 2 zu sehen ist, sind am Halteabschnitt 23 mehrere Rastelemente 38 vorgesehen, die ebenfalls in radialer Richtung nachgiebig ausgebildet sind. Der Bolzen 12 weist zu den Rastelementen 38 korrespondierende Vorsprünge 40 auf, mit denen der Bolzen 12 am Halteabschnitt 23 der Federmutter 10 verrasten kann.

Die Federmutter 10 kann zur Befestigung des ersten Bauteils 14 in axialer Richtung A auf den Bolzen 12 aufgeschoben und durch die Rastelemente 38 an diesem verrastet werden. Da sowohl die Federlaschen 26 wie auch die Rastelemente 38 in radialer Richtung nachgiebig ausgebildet sind, ist die Federmutter 10 an verschiedene Größen bzw. Durchmesser des Bolzens 12 anpassbar. In Umfangsrichtung wird der Bolzen vollständig von der äußeren Wandung 22 und zumindest teilweise durch die Federlaschen 26 bedeckt. In axialer Richtung wird der Bolzen an der Stirnwand 28 vollständig vom Steg 32 bedeckt. Im in Figur 2 gezeigten, montierten Zustand ist der Bolzen 12 also vollständig von der Federmutter 10 umschlossen.

Wie insbesondere in Figur 2 zu sehen ist, überlappen sich die Federlaschen 26 und die Rastelemente 38 in axialer Richtung A nicht. Dies hat den Vorteil, dass die Federmutter 10 mit einem einfachen Spritzgusswerkzeug ohne Schieber hergestellt werden kann. Um dies zu ermöglichen, ist der Steg 32 zudem zu den zwei Rastelementen 38 bzw. den Federlaschen 26 um 90° versetzt angeordnet, sodass sich diese ebenfalls nicht überlappen.

Die Anzahl der Federlaschen 26 bzw. der Rastelemente 38 sowie die Anordnung des Stegs 32 kann beliebig an die jeweiligen Anforderungen angepasst werden. Es ist lediglich sicherzustellen, dass sich diese in axialer Richtung A nicht überlappen, um die einfache Herstellung der Federmutter 10 sicherzustellen.

Wie insbesondere in Figur 2 zu sehen ist, sind die Rastelemente 38 in axialer Richtung A versetzt angeordnet. Dadurch bilden diese gewissermaßen ein Innengewinde. Die Vorsprünge 40 des Bolzens 12 bilden ein dazu korrespondierendes Außengewinde. Dadurch kann die Federmutter 10 in axialer Richtung A auf den Bolzen aufgeschoben werden, wobei dann die Rastelemente 38 auf dem Bolzen verrastet werden. Es ist aber auch möglich, zur genaueren Einstellung des Abstands der Federmutter 10 vom zweiten Bauteil 16, die Federmutter 10 auf das Gewinde des Bolzens 12 aufzuschrauben. Zudem ermöglicht dieses Gewinde eine einfache Demontage der Federmutter 10, da diese auf einfache Weise vom Bolzen 12 heruntergeschraubt werden kann. Eine Beschädigung der Rastelemente 38 bei der Demontage der Federmutter 10 ist somit ausgeschlossen.

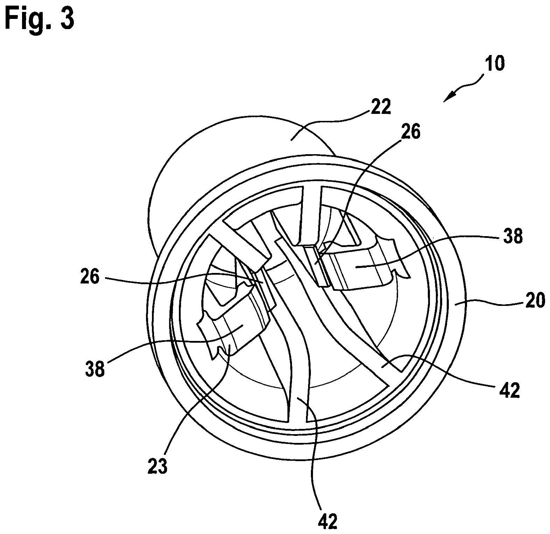

Wie in Figur 3 zu sehen ist, sind an der Innenseite der äußeren Wandung 22 zusätzliche Versteifungsrippen 42 vorgesehen, die der äußeren Wandung 22 zusätzliche Stabilität bieten, sodass eine Deformation der äußeren Wandung 22 verhindert ist. Ein solches Zusammendrücken der äußeren Wandung 22 könnte dazu führen, dass die Federlaschen 26 nicht in radialer Richtung nachgeben können.

## Patentansprüche

1. Federmutter (10) zur Befestigung auf einem Bolzen (12) mit einer im Wesentlichen länglichen Aufnahme für den Bolzen (12), die eine axiale Einschuböffnung (30) für den Bolzen (12) aufweist, wobei die Aufnahme einen Halteabschnitt für den Bolzen aufweist und die Federmutter (10) die Aufnahme in Umfangsrichtung vollständig und an einer der Einschuböffnung (30) gegenüberliegenden Stirnwand (28) umschließt, wobei die Federmutter (10) eine zylindrische, in Umfangsrichtung geschlossene äußere Wandung (22) aufweist, **dadurch gekennzeichnet, dass** die Federmutter (10) zusätzlich eine innere Wandung (24) aufweist, die die Aufnahme stirnseitig sowie teilweise in Umfangsrichtung umschließt.

2. Federmutter nach Anspruch 1, **dadurch gekennzeichnet, dass** die innere Wandung (24) zumindest zwei in Zylinderlängsrichtung verlaufende, radial federnde Laschen (26) aufweist, die insbesondere in Umfangsrichtung gleichmäßig verteilt angeordnet sind.

3. Federmutter nach Anspruch 2, **dadurch gekennzeichnet, dass** ein stirnseitiger Steg (32) vorgesehen ist, der die Aufnahme stirnseitig abschließt, und dass die federnden Laschen (26) ein stirnseitiges, am Steg (32) federnd gelagertes Ende (34) sowie ein freies, der Einschuböffnung zugewandtes Ende (36) aufweisen.

4. Federmutter nach Anspruch 3, **dadurch gekennzeichnet, dass** der Halteabschnitt den Steg (32) und die innere Wandung (24) in Zylinderlängsrichtung nicht überlappt.

5. Federmutter nach einem der vorhergehenden Ansprüche, **dadurch gekennzeichnet, dass** der Halteabschnitt Rastelemente (38) aufweist, die in radialer Richtung federnd ausgebildet sind.

6. Federmutter nach Anspruch 5, **dadurch gekennzeichnet, dass** die Rastelemente (38) in Längsrichtung paarweise gegenüberliegend angeordnet sind.

7. Federmutter nach Anspruch 5, **dadurch gekennzeichnet, dass** die Rastelemente (38) in Längsrichtung versetzt angeordnet sind und ein Innengewinde bilden.

## Claims

1. Spring nut (10) for fastening on a bolt (12), with a substantially elongate receptacle for the bolt (12), which receptacle has an axial push-in opening (30) for the bolt (12), wherein the receptacle has a holding portion for the bolt, and the spring nut (10) surrounds the receptacle completely in the circumferential direction and on an end wall (28) opposite the push-in opening (30), wherein the spring nut (10) has a cylindrical outer wall (22) which is closed in the circumferential direction, **characterized in that** the spring nut (10) additionally has an inner wall (24) which surrounds the receptacle on the end side and partially in the circumferential direction.

2. Spring nut according to Claim 1, **characterized in that** the inner wall (24) has at least two radially resilient tabs (26) which run in the longitudinal direction of the cylinder and in particular are arranged distributed uniformly in the circumferential direction.

3. Spring nut according to Claim 2, **characterized in that** an end-side web (32) which closes the receptacle on the end side is provided, and **in that** the resilient tabs (26) have an end-side end (34) mounted resiliently on the web (32) and a free end (36) facing the push-in opening.

4. Spring nut according to Claim 3, **characterized in that** the holding portion does not overlap the web (32) and the inner wall (24) in the longitudinal direction of the cylinder.

5. Spring nut according to one of the preceding claims, **characterized in that** the holding portion has latching elements (38) which are formed resiliently in the radial direction.

6. Spring nut according to Claim 5, **characterized in that** the latching elements (38) are arranged lying opposite in pairs in the longitudinal direction.

7. Spring nut according to Claim 5, **characterized in that** the latching elements (38) are arranged offset in the longitudinal direction and form an internal thread.

## Revendications

1. Ecrou à ressort (10) pour la fixation sur un boulon (12) avec un logement substantiellement allongé pour le boulon (12), qui présente une ouverture d'insertion axiale (30) pour le boulon (12), le logement présentant une portion de retenue pour le boulon et l'écrou à ressort (10) entourant le logement dans la direction périphérique complètement et au niveau d'une paroi frontale (28) opposée à l'ouverture d'insertion (30), l'écrou à ressort (10) présentant une paroi extérieure cylindrique (22) fermée dans la direction périphérique, **caractérisé en ce que** l'écrou à ressort (10) présente en outre une paroi intérieure (24) qui entoure le logement du côté frontal et partiellement dans la direction périphérique.

2. Écrou à ressort selon la revendication 1, **caractérisé en ce que** la paroi intérieure (24) présente au moins deux pattes radialement élastiques (26) s'étendant dans la direction longitudinale du cylindre, lesquelles sont disposées notamment de manière répartie uniformément dans la direction périphérique.

3. Écrou à ressort selon la revendication 2, **caractérisé en ce qu'**une nervure frontale (32) est prévue, laquelle termine le logement du côté frontal et **en ce que** les pattes élastiques (26) présentent une extrémité frontale (34) supportée élastiquement sur la nervure (32) ainsi qu'une extrémité libre (36) tournée vers l'ouverture d'insertion.

4. Écrou à ressort selon la revendication 3, **caractérisé en ce que** la portion de retenue ne chevauche pas la nervure (32) et la paroi intérieure (24) dans la direction longitudinale du cylindre.

5. Écrou à ressort selon l'une quelconque des revendications précédentes, **caractérisé en ce que** la portion de retenue présente des éléments d'encliquetage (38) qui sont réalisés de manière élastique dans la direction radiale.

6. Écrou à ressort selon la revendication 5, **caractérisé en ce que** les éléments d'encliquetage (38) sont disposés en regard par paire dans la direction longitudinale.

7. Écrou à ressort selon la revendication 5, **caractérisé en ce que** les éléments d'encliquetage (38) sont disposés de manière décalée dans la direction longitudinale et forment un filetage intérieur.
